Europäisches Patentamt

European Patent Office

Office européen des brevets

(19)

(11) Publication number : **0 333 283 B1**

(12)

# EUROPEAN PATENT SPECIFICATION

(45) Date of publication of patent specification :
07.01.93 Bulletin 93/01

(51) Int. Cl.[5] : **C01B 33/34,** C01B 33/20,
B01J 29/04

(21) Application number : **89200632.1**

(22) Date of filing : **10.03.89**

(54) Crystalline silicon-rich (metallo) silicates of the sodalite type and process for preparing such (metallo)silicates.

(30) Priority : **15.03.88 GB 8806154**

(43) Date of publication of application :
**20.09.89 Bulletin 89/38**

(45) Publication of the grant of the patent :
**07.01.93 Bulletin 93/01**

(84) Designated Contracting States :
**BE CH DE FR GB IT LI NL SE**

(56) References cited :
**EP-A- 0 219 810**

(56) References cited :
**NATURE, vol. 317, 12th September 1985, pages 157-158, Basingstoke, GB; D.M. BIBBY et al.: "Synthesis of silica-sodalite fromnon-aqueous systems"**
**HELVETICA CHIMICA ACTA, vol. 52, fascicule 7, 1969, pages 1853-1860; C. BAERLOCHER et al.: "Synthese und Kristallstruktur vonTet-ramethylammonium-Sodalith"**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **Keijsper, Johannes Jacobus**
**Badhuisweg 3**
**NL-1031 CM Amsterdam (NL)**
Inventor : **Mackay, Munro**
**Badhuisweg 3**
**NL-1031 CM Amsterdam (NL)**

EP 0 333 283 B1

**Description**

The present invention relates to crystalline silicon-rich (metallo)silicates of the sodalite type and a process for preparing such (metallo)silicates utilizing a specific organic compound.

Crystalline (metallo)silicates of the sodalite type are well known zeolites with a structure having an open framework of relatively large cages and consisting of four- and six-membered rings. Crystalline (metallo)silicates of the sodalite type are generally defined by their X-ray powder diffraction pattern as described for instance in Collection of Simulated XRD-Powder Patterns for Zeolites, R. von Ballmoos (1984), page 94.

Usually (metallo)silicates of the sodalite type are synthesized from aqueous solutions without the use of organic additives and normally have a Si/Al-ratio of about one.

It is known from the work of Ch. Baerlocher and W.M. Meier reported in Helvetica Chimica Acta, Vol. 52, (1969) pp. 1853-1860, that a relatively silicon-rich sodalite can be prepared having a Si/Al-ratio of 5.3 from an aqueous solution in the presence of tetramethylammonium (TMA) cations.

The structure of such a sodalite, however, is reported to collapse in the presence of argon or oxygen at a temperature above 537 °C.

It is further known from work of D.M. Bibby et al. (Nature, vol. 317, [1985] pp. 157-158) that silicon-rich sodalites or pure silica forms of sodalites can be synthesized when using ethylene glycol or propanol as reaction-medium, i.e. under non-aqueous conditions. It appears, however, that not all organic material can be removed by calcination from these sodalites so that black products are obtained after calcination.

It should further be noted that it is claimed in European patent specification no. 219810 to prepare borosilicates of the sodalite type having a $SiO_2/B_2O_3$-ratio up to a maximum of 15 utilizing relatively high concentrations of trioxane at a relatively low temperature. One would expect, therefore, that substitution of aluminium for boron under the conditions described in said European patent specification would lead to the formation of a sodalite-type material having a comparable $SiO_2/Al_2O_3$-ratio. It appeared however, that a completely different product, of the ZSM-4-type, was obtained when using aluminium instead of boron, which appears to be in line with US patent specification no. 4,377,502 relating to the preparation of either ZSM-4, ZSM-5, mordenite or ferrierite by using specific organic templates (triethanolamine, dioxane, morpholine or 2-amino-2-ethyl-1,3-propanediol). Moreover, when gallium was substituted for boron under similar conditions an amorphous product was obtained.

Surprisingly, it has now been found that crystalline (metallo)silicates of the sodalite type, having a high silicon content can be produced in an aqueous system containing relatively small quantities of trioxane. It appears moreover that the (metallo)silicates produced are very stable and of high crystallinity.

The present invention therefore relates to crystalline silicon-rich (metallo)silicates of the sodalite type having in the as-synthesized form a molar composition expressed by the formula:

$(0-0.025)M_{2/n}O.(0-0.025)X_2O_3.SiO_2.(0.01-0.2)$ trioxane.$(0-5.0)H_2O$

wherein M is an alkali or alkaline earth metal ion having a valency n, and X is at least one of Al, Fe or Ga.

Preferably, the crystalline silicon-rich (metallo)silicates of the sodalite type according to the present invention have in the as-synthesized form a molar composition expressed by the formula:

$(0-0.02)M_{2/n}O.(0-0.02)X_2O_3.SiO_2.(0.12-0.16)$ trioxane. $(0-1.0)H_2O$

wherein M, n and X have the meanings as described hereinabove.

Crystalline (metallo)silicates of the sodalite type prepared according to the process of the present invention are remarkably stable; to such an extent that substantially all trioxane molecules incorporated in the sodalite cages can be removed by calcination, after which a highly pure, fresh, stable, crystalline, hydrophobic and microporous zeolite is obtained.

Therefore, the present invention also relates to crystalline silicon-rich (metallo)silicates of the sodalite type having in the calcined form a molar composition expressed by the formula:

$(0-0.025) M_{2/n}O.(0-0.025)X_2O_3.SiO_2$

wherein M is an alkali or alkaline earth metal ion having a valency n, and X is at least one of Al, Fe or Ga.

The present invention preferably relates to aluminosilicates of the sodalite type as mentioned hereinabove.

The present invention further relates to a process for preparing crystalline silicon-rich (metallo)silicates of the sodalite type in the as-synthesized form as defined hereinabove, which comprises maintaining an aqueous mixture comprising a source of silicon, optionally a source of at least one of aluminium, iron or gallium a source of alkali or alkaline earth metal (M) and trioxane at elevated temperature until a crystalline (metallo)silicate of the sodalite type is formed which is subsequently separated from the mother liquor and dried, in which mixture the various components are initially present in the following molar ratios:

$X_2O_3$ : $SiO_2$ = 0-0.033
$H_2O$ : $SiO_2$ = 5-200
$OH^-$ : $SiO_2$ = 0.05-1.0

trioxane        : $SiO_2$ = 0.3 -4.0
M               : $SiO_2$ = 0.01-4.0

Preferably, the crystalline (metallo)silicates of the sodalite type according to the present invention are prepared from an aqueous mixture in which the various components are initially present in the following molar ratios:

$X_2O_3$        : $SiO_2$ = 0-0.025
$H_2O$          : $SiO_2$ = 15-50
$OH^-$          : $SiO_2$ = 0.1-0.4
trioxane        : $SiO_2$ = 0.5-1.0
M               : $SiO_2$ = 0.1-1.0

The preparation of the crystalline (metallo)silicates of the sodalite type according to the present invention can suitably be carried out by maintaining the aqueous mixture at a temperature above 100 °C, and in particular between 150 and 200 °C. Preferably, the aqueous mixture is maintained for at least 6 hours at such temperatures. The product obtained can suitably be calcined at a temperature of 500-800 °C. The preparation according to the present invention can be carried out both at autogeneous pressure and at a more elevated pressure. Examples of suitable alkali or alkaline earth metal sources which can be used in the preparation of the crystalline (metallo)silicates of the sodalite type according to the present invention are nitrates, carbonates, hydroxides and oxides. Examples of suitable silicon, aluminium, iron or gallium sources comprise amorphous solid silicas, silica sols, silica gels and siliceous acid; aluminium hydroxide, aluminium sulphate, gamma-alumina and preferably sodium aluminate; iron nitrates; gallium nitrate or freshly prepared gallium hydroxide. Preferably, a sodium compound, in particular sodium hydroxide is used as alkali metal source in the process according to the present invention.

The crystalline (metallo)silicates of the sodalite type according to the present invention can be used as absorbent and extractant means, and as catalyst or as catalyst carrier in the operation of various catalytic processes. When the crystalline (metallo)silicates of the sodalite type according to the present invention are used in catalytic processes they normally comprise one or more compounds having catalytic activity; in particular one or more salts of metals of Group IIIA, VIB, VIII or rare earth metals are suitable compounds.

The cation(s) present in the as-synthesized form of the crystalline (metallo)silicates of the sodalite type according to the present invention can be (partly) replaced by ion exchange with other cations including other metal ions.

The invention will now be illustrated by the following Examples.

Example I

A crystalline silicon-rich aluminosilicate of the sodalite type was prepared by mixing an aqueous mixture of silica sol (40 %wt $SiO_2$), NaOH, $NaAlO_2$ and trioxane in water till a homogeneous gel is obtained. The gel obtained is subsequently maintained at 150 °C for 7 days in a stirred teflon-lined autoclave at autogenous pressure. The molar composition of the aqueous mixture was as follows:

40 $SiO_2$, 0.7 $Al_2O_3$, 4.5 $Na_2O$, 1000 $H_2O$, 30 trioxane.

After synthesis the solids were separated from the unreacted components, water washed, and dried at 120 °C. The product of high crystallinity was analysed by X-ray diffraction and elemental analyses and had the following properties:

a) an X-ray powder diffraction pattern of which the seven strongest lines are shown hereinbelow. (Relative error is 3%).

| d(Å) | Intensity |
|---|---|
| 6.26 | 26 |
| 4.43 | 40 |
| 3.62 | 100 |
| 3.13 | 17 |
| 2.80 | 17 |
| 2.56 | 31 |
| 2.37 | 3 |

b) a molar composition expressed by the formula:

0.01 $Na_2O.0.02\ Al_2O_3.SiO_2.0.14$ trioxane.0.14 $H_2O$.

Subsequently the crystalline product obtained was calcined in air at 700 °C for 18 hours, analysed by X-ray diffraction and elemental analyses and had the following properties:

a) an X-ray powder diffraction pattern of which the seven strongest lines are shown hereinbelow. (Relative error is 3%).

| d(A) | Intensity |
|------|-----------|
| 6.17 | 100 |
| 4.39 | 14 |
| 3.60 | 58 |
| 3.13 | 13 |
| 2.80 | 13 |
| 2.55 | 15 |
| 2.36 | 1 |

b) a molar composition expressed by the formula:

0.005 $Na_2O.0.02\ Al_2O_3.SiO_2$.

## Example II

An experiment has been carried out in a substantially analogous manner as described in Example I, except that no aluminium source was initially present in the reaction mixture and that the temperature was maintained at 170 °C.

The product obtained was a pure silicate of the sodalite type.

## Example III

An experiment has been carried out in a substantially analogous manner as described in Example I, except that a gallium source (gallium nitrate) has been substituted for the aluminium source and that the temperature was maintained at 175 °C. The product obtained was a silicon-rich gallium silicate of the sodalite type.

## Comparative Examples

Experiments have been carried out in a way substantially analogous to that of Example I expect that the temperature was maintained at 170 °C using organic compounds structurally related to trioxane.

The results of these comparative experiments are given in the table shown hereinbelow.

| Organic Compound Used | Product |
|-----------------------|---------|
| Trithiane | Amorphous |
| Paraldehyde | Amorphous, ZSM-5, Kenyaite |
| Dioxane | ZSM-5, mordenite, quartz |
| Morpholine | ZSM-5, ferrierite |
| 1,3,5-Triazine | Amorphous |
| 1,2,4-Triazine | Amorphous |

It is apparent from the results given in the table shown hereinabove that crystalline aluminosilicates of the sodalite type are not prepared when use is made of organic compounds structurally related to trioxane.

**Claims**

1. Crystalline silicon-rich (metallo)silicates of the sodalite type having in the as-synthesized form a molar composition expressed by the formula:

$(0-0.025)M_{2/n}0.(0-0.025)X_2O_3.SiO_2.(0.01-0.2)$ trioxane.$(0-5.0)H_2O$

wherein M is an alkali or alkaline earth metal ion having a valency n, and X is at least one of A1, Fe or Ga.

2. Crystalline silicon-rich (metallo)silicates of the sodalite type according to claim 1 having in the as-synthesized form a molar composition expressed by the formula:

$(0-0.02)M_{2/n}0.(0-0.02)X_2O_3.SiO_2.(0.12-0.16)$ trioxane.$(0-1.0)H_2O$.

3. Crystalline silicon-rich (metallo)silicates of the sodalite type having in the calcined form a molar composition expressed by the formula:

$(0-0.025)M_{2/n}0.(0-0.025)X_2O_3.SiO_2$

wherein M is an alkali or alkaline earth metal ion having a valency n, and X is at least one of Al, Fe or Ga.

4. Crystalline silicon-rich (metallo)silicates of the sodalite type according to any one of claims 1 - 3, in which X represents Al.

5. Crystalline silicon-rich (metallo)silicates of the sodalite type according to any one of claims 1 - 4, in which M represents a sodium ion.

6. Crystalline silicon-rich (metallo)silicates of the sodalite type according to any one of claims 1 - 5, in which one or more catalytically active compounds are incorporated.

7. Crystalline silicon-rich (metallo)silicates of the sodalite type according to claim 6, in which the catalytically active compound comprises one or more salt(s) of metals of Group IIIA, VIB, VIII, or rare earth metals.

8. A process for preparing crystalline silicon-rich (metallo)silicates of the sodalite type as defined in Claim 1 or 2 which comprises maintaining an aqueous mixture comprising a source of silicon, optionally a source of at least one of aluminium, iron or gallium, a source of alkali or alkaline earth metal (M) and trioxane at elevated temperature until a crystalline sodalite is formed which is subsequently separated from the mother liquor and dried, in which mixture the various components are initially present in the following molar ratios:

$X_2O_3$ : $SiO_2$ = 0-0.033
$H_2O$ : $SiO_2$ = 5-200
$OH^-$ : $SiO_2$ = 0.05-1.0
trioxane : $SiO_2$ = 0.3 -4.0
M : $SiO_2$ = 0.01-4.0

9. A process according to claim 8, in which the various components in the mixture are initially present in the following molar ratios:

$X_2O_3$ : $SiO_2$ = 0-0.025
$H_2O$ : $SiO_2$ = 15-50
$OH^-$ : $SiO_2$ = 0.1-0.4
trioxane : $SiO_2$ = 0.5-1.0
M : $SiO_2$ = 0.1-1.0

10. A process according to claim 8 or 9, which comprises maintaining the mixture at a temperature above 100 °C.

11. A process according to claim 10, which comprises maintaining the mixture at a temperature of 150-200 °C for at least 6 hours.

12. A process according to any one of claims 8 - 11, in which a sodium compound, in particular sodiumhydroxide is used as source of an alkali metal.

13. A process according to any one of claims 8 - 12, which comprises calcining the product obtained at a temperature of 500-800 °C.

EP 0 333 283 B1

14. A process for carrying out catalytic reactions in which use is made of a crystalline silicon-rich (metallo)silicate as claimed in anyone of claims 1 - 7.

**Patentansprüche**

1. Kristalline siliciumreiche (Metallo) Silikate vom Sodalittyp, welche in der mittels Synthese (as-synthesized) erhaltenen Form eine molare Zusammensetzung aufweisen, wie durch die nachstehende Formel wiedergegeben:

$(0-0.025)M_{2/n}0.(0-0.025)X_2O_3.SiO_2.(0.01-0.2)$ Trioxan$.(0-5.0)H_2O$

in welcher M ein Alkali- oder Erdalkalimetallion mit einer Wertigkeit (n) bedeutet und X mindestens eines der Metalle Al, Fe oder Ga ist.

2. Kristalline siliciumreichen (Metallo) Silikate nach Anspruch 1, welche in der mittels Synthese erhaltenen Form eine molare Zusammensetzung aufweisen, wie durch die nachstehende Formel wiedergegeben:

$(0-0.02)M_{2/n}0.(0-0.02)X_2O_3.SiO_2.(0.12-0.16)$ Trioxan$.(0-1.0)H_2O$

3. Kristalline siliciumreiche (Metallo) Silikate des Sodalittyps, welche in der kalzinierten Form eine molare Zusammensetzung aufweisen, wie durch die nachstehende Formel wiedergegeben:

$(0-0.025)M_{2/n}0.(0-0.025)X_2O_3.SiO_2$

in welcher M ein Alkali- oder Erdalkalimetallion mit einer Wertigkeit (n) bedeutet und X mindestens eines der Metalle Al, Fe oder Ga ist.

4. Kristalline siliciumreiche (Metallo) Silikate vom Sodalittyp nach irgendeinem der Ansprüche 1 - 3, wobei X Aluminium bedeutet.

5. Kristalline siliciumreiche (Metallo) Silikate vom Sodalittyp nach irgendeinem der Ansprüche 1 - 4, wobei M ein Natriumion bedeutet.

6. Kristalline siliciumreiche (Metallo) Silikate vom Sodalittyp nach irgendeinem der Ansprüche 1 - 5, in welcher ein oder mehrere katalytisch aktive Verbindung(en) eingearbeitet worden ist (sind).

7. Kristalline siliciumreiche (Metallo) Silikate des Sodalittyps nach Anspruch 6, wobei die katalytische aktive Verbindung eine oder mehrere Metalle der Gruppen IIIA, VIB oder VIII oder aus der Gruppe der seltenen Erdmetalle umfaßt.

8. Ein Verfahren zur Herstellung der kristallinen siliciumreichen (Metallo) Silikate des Sodalittyps, wie durch die Ansprüche 1 oder 2 definiert, welches die folgenden Maßnahmen umfaßt: Halten einer Mischung, welche eine Quelle für Silicium, gegebenenfalls eine Quelle für mindestens eines der Metalle Al, Fe oder Ga, und eine Quelle für Alkali- oder Erdalkalimetall (M) und Trioxan enthält, auf erhöhter Temperatur, bis sich ein kristalliner Sodalit gebildet hat, der anschließend von der Mutterlauge abgetrennt und getrocknet wird, wobei die verschiedenen Komponenten in der Mischung anfangs in den nachstehenden Molverhältnissen vorhanden sind:

$X_2O_3$ : $SiO_2$ = 0-0.033
$H_2O$ : $SiO_2$ = 5-200
$OH^-$ : $SiO_2$ = 0,05-1.0
Trioxan : $SiO_2$ = 0.3 -4.0
M : $SiO_2$ = 0.01-4.0

9. Ein Verfahren, wie in Anspruch 8 beansprucht, wobei die verschiedenen Komponenten in der Mischung anfangs in den nachstehenden Molverhältnissen vorhanden sind:

$X_2O_3$ : $SiO_2$ = 0-0.025
$H_2O$ : $SiO_2$ = 15-50
$OH^-$ : $SiO_2$ = 0.1-0.4
Trioxan : $SiO_2$ = 0.5-1.0
M : $SiO_2$ = 0.1-1.0

10. Ein Verfahren nach Anspruch 8 oder 9, welches das Halten der Mischung auf einer Temperatur oberhalb 100 °C umfaßt.

6

EP 0 333 283 B1

**11.** Ein Verfahren gemäß Anspruch 10, welches das Halten der Mischung während mindestens 6 Stunden auf einer Temperatur zwischen 150 und 200 °C umfaßt.

**12.** Ein Verfahren, wie in irgendeinem der Ansprüche 8 - 11 beansprucht, in welchem eine Natriumverbindung, insbesondere NaOH, als Quelle für ein Alkalimetall verwendet wird.

**13.** Ein Verfahren, wie in irgendeinem der Ansprüche 8 - 12 beansprucht, in welchem das erhaltene Produkt bei einer Temperatur von 500 bis 800 °C kalziniert wird.

**14.** Ein Verfahren zur Durchführung katalytischer Reaktionen, in welchem ein kristallines siliciumreiches (Metallo) Silikat, wie in irgendeinem der Ansprüche 1 - 7 beansprucht, verwendet wird.


## Revendications

**1.** (Métallo)silicates cristallins, riches en silicium, du type sodalite présentant, sous la forme telle que synthétisée, une composition molaire illustrée par la formule:
$(0\text{-}0,025)M_{2/n}0.(0\text{-}0,025)X_2O_3.SiO_2.(0,01\text{-}0,2)$ trioxane. $(0\text{-}5,0)H_2O$
dans laquelle M est un ion de métal alcalin ou de métal alcalino-terreux présentant une valence n, et X est au moins un élément parmi Al, fe ou Ga.

**2.** (Métallo)silicates cristallins, riches en silicium du type sodalite selon la revendication 1, présentant, sous la forme telle que synthétisée une composition molaire illustrée par la formule
$(0\text{-}0,02)M_{2/n}0.(0\text{-}0,02)X_2O_3.SiO_2.SiO_2.(0,12\text{-}0,16)$ trioxane. $(0\text{-}1,0)H_2O.$

**3.** (Métallo)silicates cristallins riches en silicium, du type sodalite présentant, sous la forme telle que synthétisée, une composition molaire illustré par la formule:
$(0\text{-}0,025)M_{2/n}0.(0\text{-}0,025)X_2O_3.SiO_2.(0,01\text{-}0,2)$ trioxane. $(0\text{-}5,0)H_2O$
dans laquelle M est un ion de métal alcalin ou de métal alcalino-terreux présentant une valence n, et X est au moins un élément parmi Al, fe ou Ga.

**4.** (Métallo)silicates cristallins, riches en silicium du type sodalite, selon l'une quelconque des revendications 1 à 3, dans lesquels X représente Al.

**5.** (Métallo) silicates cristallins, riches en silicium, du type sodalite selon l'une quelconque des revendications 1 à 4, dans lequel M représente un ion sodium.

**6.** (Métallo) silicates cristallins, riches en silicium, du type sodalite selon l'une quelconque des revendications 1 à 5, dans lequel on incorpore un ou plus d'un composé actif du point de vue catalytique.

**7.** (Métallo)silicates cristallins, riches en silicium, du type sodalite selon la revendication 6, dans lequel le composé actif du point de vue catalytique comprend un ou plus d'un sel de métaux du groupe IIIA, VIB, VIII ou des métaux des terres rares.

**8.** Un procédé pour préparer des (métallo)silicates cristallins, riches en silicium du type sodalite sous la forme telle que synthétisée comme défini ci-dessus, dans la revendication 1 ou 2, qui consiste à maintenir un mélange aqueux comportant une source de silicium, facultativement une source d'au moins un élément choisi parmi l'aluminium, le fer ou la cadmium, une source de métal alcalin ou de métal alcalino terreux (M) et du trioxane à température élevée jusqu'à ce que se forme un (métallo)silicate cristallin du type sodalite, qui est, par la suite, séparé de la liqueur mère puis séché, mélange dans lequel les différents composants sont initiale.ment présents dans les rapports molaires suivants :

$X_2O_3$ : $SiO_2$ = 0-0,033
$H_2O$ : $SiO_2$ = 5-200
$OH^-$ : $SiO_2$ = 0,05-1,0
trioxane : $SiO_2$ = 0,3-4,0
M = $SiO_2$ = 0,01-4,0

**9.** Un procédé selon la revendication 8, dans lequel les différents composants dans le mélange sont initialement présents dans les rapports molaires suivants:

|  |  |
|---|---|
| $X_2O_3$ | : $SiO_2$ = 0-0,025 |
| $H_2O$ | : $SiO_2$ = 15-50 |
| $OH^-$ | : $SiO_2$ = 0,1-0,4 |
| trioxane | : $SiO_2$ = 0,5-1,0 |
| M | : $SiO_2$ = 0,1-1,0 |

10. Un procédé selon la revendication 8 ou 9, selon lequel on maintient le mélange à une température supérieure à 100°C.

11. Un procédé selon la revendication 10, selon lequel on maintient le mélange à une température de 150-200°C pendant au moins 6 heures.

12. Un procédé selon l'une quelconque des revendications 8 à 11, dans lequel on utilise comme source de métal alcalin, un composé du sodium, en particulier l'hydroxyde de sodium.

13. Un procédé selon l'une quelconque des revendications 8 à 12, selon lequel on calcine le produit obtenu à une température de 500 à 800°C.

14. Un procédé pour la mise en oeuvre de réactions catalytiques, dans lequel on utilise un (métallo)silicate cristallin, riche en silicium, tel que revendiqué dans l'une quelconque des revendications 1 à 7.